# EUROPEAN PATENT APPLICATION

(11) **EP 2 128 512 A2**
(43) Date of publication of application: **02.12.2009**
(21) Application number: 09251391.0
(22) Date of filing: 26.05.2009
(51) Int. Cl.: F16L 55/172, B25B 25/00

(54) **Clamp installation tool**

(30) Priority: 30.05.2008 GB 0809855
(71) Applicant: Crane Ltd., Hitchin Hertfordshire SG4 0UD (GB)
(72) Inventor: Pizzey, Martin Thomas, Capel St Mary, Ipswich, Suffolk, IP9 2JL (GB); Kinsey, Jonathan, Suffolk, IP11 9SR (GB)
(74) Representative: Townsend, Victoria Jayne

(57) **Abstract**

A repair clamp tool in accordance with the invention comprises two arms pivotally connected at a common point 3 dividing each arm into a long portion and a short portion. The short portions each carry a pin P1, P2, the pins being carried on opposing surfaces 1a, 1b of the short portions of the arms. Pin P2 is shorter in length than P1, the pins extend substantially perpendicularly from the opposing surfaces. The longer portions each have a bend 4 from which the arms extend substantially in parallel terminating in grip handles 5. It will be appreciated that movement of the grip handles in an arc towards and away from each other respectively will result in a pincer movement of the shorter portions by means of which a clamp can be gripped and manipulated.

## Description

The present invention relates to a tool for use in the installation of clamps, in particular pipe repair clamps sited in locations where there is restricted access.

In the particular case of underground pipe repair, repair clamps generally comprising multiple, interlinked parts which together form a cylindrical enclosure which is secured around the damaged pipe. The applicant's co-pending international patent application no. PCT/GB2007/004510 describes some examples of such clamps. Other clamp configurations include split collars, flexible arrangements (whether single or multi part) which can be wrapped around damaged pipe and multi-part clamps which are assembled onto the pipe before the parts are secured together. The present invention is of potential use in the installation of all the aforesaid types of clamp.

Conventionally clamps are assembled around damaged pipe manually. This involves the digging of a trench around the pipe of sufficient dimensions to facilitate entry by human operator and enable that operator manually to apply the clamp to the damaged pipe. Various health and safety issues arise when adopting this method, for example; the danger of passing traffic when pipes are repaired at roadsides, collapsing of trench walls on to personnel causing physical harm to operators and injury or harm inflicted by release of high pressure fluids carried by the damaged pipe under repair. In addition, the process of digging a large trench is labour intensive and expensive and at roadside sites can cause considerable disruption to already congested traffic routes.

The present invention aims to provide a tool suitable for use in the installation of repair clamps on damaged pipe sited in an underground location which facilitates installation by an operator located at ground level. Such a tool provides that a clamp can be installed in a trench of much smaller dimensions and greatly reduces the effort needed in preparing a trench for access to the pipe. Consequently, there are considerable safety and economic advantages to use of the tool in place of conventional manual methods.

In accordance with the present invention there is provided a repair clamp installation tool configured for use with a multipart, interlinked repair clamp, the tool comprising a pair of arms mutually pivotally connected at a common axis, each arm including at a first end an engagement member, the engagement members being configured, in use, to engage with reciprocal engagement means of a repair clamp.

In one simple form, the engagement members are pins which extend substantially perpendicularly from mutually opposing and inwardly facing surfaces and, in use, can be received in the apertures or recesses of reciprocal engagement lugs provided on an outer surface of a repair clamp. In an alternative arrangement, the pins are provided on the outwardly facing surfaces of the arms. Optionally, one pin is of shorter length than the other, this enables easier manipulation of the tool onto and off the clamp without loss of control of the clamp.

As an alternative to pins, the engagement members may be provided in the form of hooks or pincers.

The second ends of the arms may be specifically adapted to serve as handles to be gripped by the operator. For example, the handles may be ergonomically shaped or provided with a gripping surface.

Conveniently, to permit use in deep trenches, the common axis sits much closer to the first end of the arms than the second. Optionally, the longer portion of the arms extending from the common axis to the second end is reversibly collapsible to allow for compact storage of the tool. The means for collapsing may, optionally, be adjustable permitting the length of the longer portion to be adjusted to suit specific needs, for example in trenches of different depth. For example, the means for collapsing may be telescopic means, optionally accompanied by one or more locking means whereby the length of the longer arm portions can be adjusted.

Desirably, the longer portion of the arms includes a bend or curve on each arm serving to bring the second ends towards each other, thereby reducing the arm span needed to close the first ends together.

The tool may be manufactured from any strong durable material including, but not strictly limited to; steel, aluminium, cast iron, palyethylene, PVC, Acetal, Nylon or similar rigid plastic or combinations of the aforesaid.

In another aspect, the invention comprises in combination a repair clamp and a tool for installing the repair clamp, the tool comprising a pair of arms mutually pivotally connected at a common axis, each arm including at a first end an engagement member, the engagement members being provided on mutually opposing surfaces of the arms and the clamp comprising a multipart, interlinked member configured to encircle a damaged pipe and having on an outer exposed surface thereof reciprocal engagement means for reciprocally engaging with the engagement members of the tool.

In one example, the engagement members are engagement pins and the reciprocal engagement members are lugs. In a more preferred example, the pins are of different lengths.

In another aspect, the tool of the present invention is provided in a kit accompanied by an extended fastener tool, for example a socket spanner. The kit may further include a repair clamp.

One embodiment of the invention and an example of its application will now be described with reference to the accompanying figures in which;
Figure 1 shows a tool in accordance with the invention;
Figure 2 shows the tool of Figure 1 engaged with a repair clamp, the repair clamp in an opened configuration;
Figure 3 shows a the tool of Figure 1 engaged with a repair clamp, the repair clamp in a closed configuration;

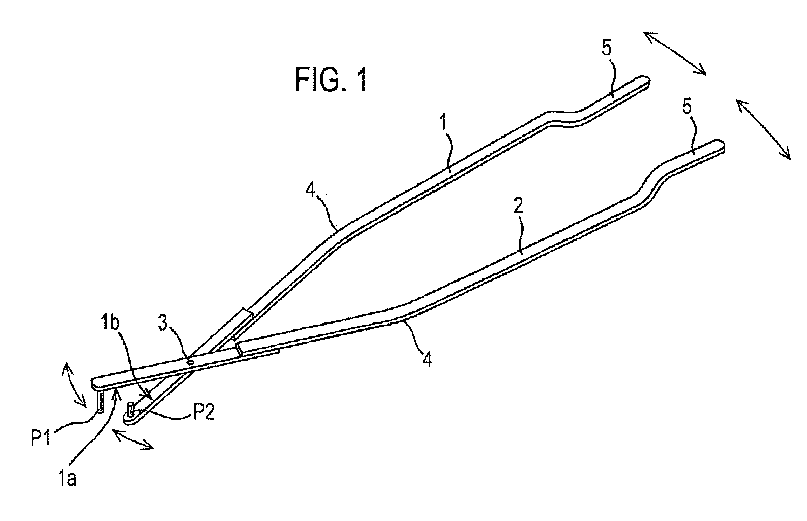

As can be seen from Figure 1, a repair clamp tool in accordance with the invention comprises two arms pivotally connected at a common point 3 dividing each arm into a long portion and a short portion. The short portions each carry a pin P1, P2, the pins being carried on opposing surfaces 1a, 1b of the short portions of the arms. Pin P2 is shorter in length than P1, the pins extend substantially perpendicularly from the opposing surfaces. The longer portions each have a bend 4 from which the arms extend substantially in parallel terminating in grip handles 5. It will be appreciated that movement of the grip handles in an arc towards and away from each other respectively will result in a pincer movement of the shorter portions by means of which a clamp can be gripped and manipulated. Whilst not essential, this arrangement is advantageous in creating the smallest gap between the handles in the fully assembled and closed position thereby reducing arm span needed to effect installation of the clamp.

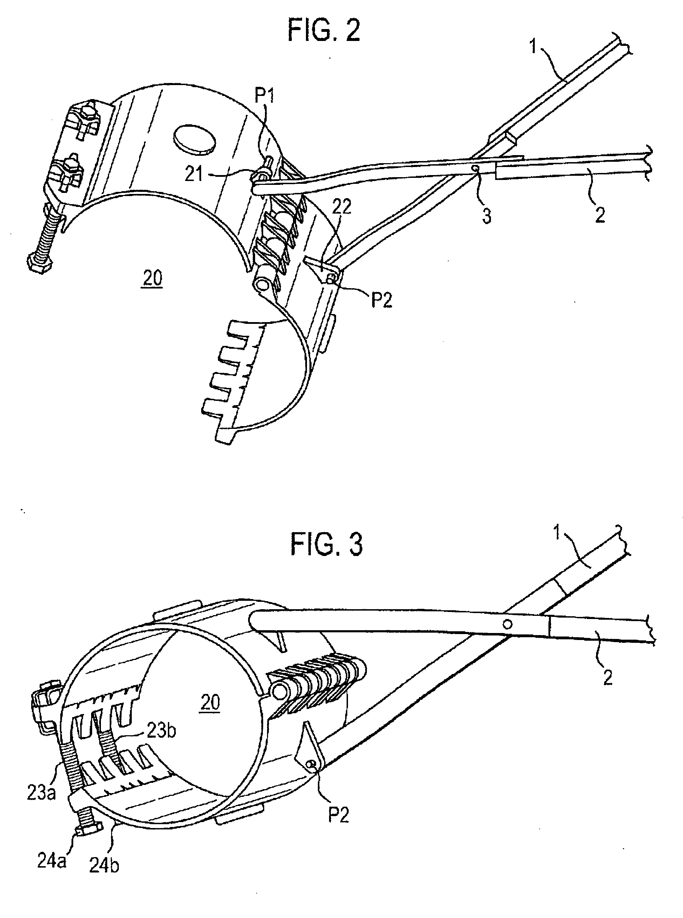

As can be seen from Figure 2 the tool of Figure 1 can engage with a hinged clamp 20 by inserting pins P1 and P2 into reciprocal holes in lugs 21 22 provided on an outer exposed surface of the clamp.

As can be seen in Figure 3, the handles 5 of the tool can be manoeuvred to manipulate the tool not only to engage with the lugs 21, 22 of the clamp 20, but also to open and close the clamp 20 around a damaged pipe (not shown).

The processes of engagement and manipulation are described in more detail below.

The clamp 20 is offered up to the tool in either the fully open, partially open, or closed position. The tool is opened to allow the long pin P1 to engage the appropriately shaped lug 21 of the repair clamp.

When pin P1 is fully engaged, the short pin P2 is offered up to the other repair clamp lug 22 by swinging the handle of arm 1 to a suitable position. Once in the proximity of the lug 22 the tool is slid axially to enable the pin P2 to engage the lug 22 which in turn will allow the pin P1 partially to disengage from lug 21. The tool is now attached and ready for installation of the repair clamp 20.

If the clamp 20 is either partially open or closed the tool is manipulated to open the clamp 20 fully (Figure 2) to allow easy positioning over a pipe to be repaired. Once the clamp 20 is fully open, the operator maintains the tool position and lowers the clamp down on to the pipe so as to align the spine or hinge of the repair clamp 20 with the uppermost facing surface of the damaged pipe.

Once the clamp 20 is resting on the crest of the pipe, the operator can, with a combined downward force and an inward scissor motion; snap fit the clamp around the pipe. The repair clamp shown includes means for automatically locking it's position once snapped around the damaged pipe (as described in co-pending international patent application no. PCT/GB2007/004510).

Once this stage is achieved the tool is slid axially along the uppermost facing pipe surface to disengage the pin P2 but maintain location with the long pin P1. When the short pin P2 is disengaged the handle of arm 1is no longer needed.

The operator now pulls on the handle portion of arm 2 effecting rotation of the clamp 20 to present the fastener nuts 24a, 24b, or bolts 23a, 23b to the operator. The operator maintains the tool position holding the clamp in place and engages an extended socket spanner (not shown) to the nuts or bolts and torques them in turn to the required torque. When the final torque is reached the spanner is removed and the tool is slid axially in an opposing direction to remove the long pin P1 from lug 21 completely disengaging the tool from the clamp.

## Claims

1. A repair clamp installation tool configured for use with a multipart, interlinked repair clamp, the tool comprising a pair of arms (1, 2) mutually pivotally connected at a common axis (3), each arm including at a first end an engagement member (P1, P2) the engagement members (P1, P2) being configured, in use, to engage with reciprocal engagement means (21, 22) of a repair clamp (20).

2. A repair clamp installation tool as claimed in claim 1 wherein the engagement members (P1, P2) are pins which extend substantially perpendicularly from mutually opposing, inwardly facing surfaces (1a, 1b) of the arms (1, 2) and, in use, can be received in the apertures or recesses of reciprocal engagement lugs (21, 22) provided on an outer surface of a repair clamp (20).

3. A repair clamp installation tool as claimed in claim 1 wherein the engagement members (P1, P2) are pins which extend substantially perpendicularly from outwardly facing surfaces of the arms and, in use, can be received in the apertures or recesses of reciprocal engagement lugs (21, 22) provided on an outer surface of a repair clamp (20).

4. A repair clamp installation tool as claimed In claim 2 or claim 3 wherein one pin (P2) is of shorter length than the other (P1).

5. A repair clamp installation tool as claimed in claim 1 wherein the engagement members (P1, P2) are provided in the form of hooks or pincers.

6. A repair clamp installation tool as claimed in any preceding claim wherein the second ends of the arms (1, 2) are specifically adapted to serve as handles (5) to be gripped by the operator.

7. A repair clamp installation tool as claimed in any preceding claim wherein the common axis (3) sits much closer to the first end of the arms than the second.

8. A repair clamp installation tool as claimed in claim 7 wherein the longer portion of the arms extending from the common axis (3) to the second end is reversibly collapsible.

9. A repair clamp installation tool as claimed in claim 8 wherein the means for collapsing is adjustable permitting the length of the longer portion to be adjusted to suit specific needs, for example in trenches of different depth.

10. A repair clamp installation tool as claimed in claim 9 wherein the means for collapsing are telescopic means accompanied by one or more locking means whereby the length of the longer arm portions can be adjusted.

11. A repair clamp installation tool as claimed in any of claims 7 to 10 wherein the longer portion of the arms includes a bend or curve (4) on each arm (1,2) serving to bring the second ends towards each other, thereby reducing the arm span needed to manipulate the tool, engage the engagement members (P1, P2) with the reciprocal engagement members (21, 22) and effect installation of the clamp (20).

12. A repair clamp installation tool as claimed in any preceding claim manufactured from any strong durable material selected from; steel, aluminium, cast iron, polyethylene, PVC, Acetal, Nylon or combinations of the aforesaid.

13. In combination, a repair clamp and an installation tool for installing the repair clamp, the tool having a configuration as claimed in any one of claims 1 to 12 and the clamp (20) comprising a multipart, interlinked member configured to encircle a damaged pipe and having on an outer exposed surface thereof reciprocal engagement means (21, 22) for reciprocally engaging with the engagement members (P1, P2) of the tool.

14. A combination as claimed in claim 12 further comprising an extended fastener tool.

15. A combination of a repair clamp installation tool as claimed in any of claims 1 to 10 and an extended fastener tool.
